(19) Europäisches Patentamt

European Patent Office

Office européen des brevets

(11) **EP 0 481 749 B1**

(12) **EUROPEAN PATENT SPECIFICATION**

(45) Date of publication and mention
of the grant of the patent:
**21.07.1999 Bulletin 1999/29**

(51) Int. Cl.[6]: **C08F 10/00**, C08F 4/654,
C08F 4/657

(21) Application number: **91309518.8**

(22) Date of filing: **16.10.1991**

(54) **Olefin polymerization catalyst**

Katalysator für Olefinpolymerisation

Catalyseur de polymérisation d'oléfines

(84) Designated Contracting States:
**AT BE CH DE DK ES FR GB GR IT LI LU NL SE**

(30) Priority: **18.10.1990 US 599550**
**18.10.1990 US 599538**
**18.10.1990 US 599610**
**22.10.1990 US 600781**
**22.10.1990 US 600898**

(43) Date of publication of application:
**22.04.1992 Bulletin 1992/17**

(60) Divisional application:
**98124311.6 / 0 908 470**
**98124310.8 / 0 908 469**
**98124309.0 / 0 908 472**
**98124308.2 / 0 908 471**

(73) Proprietor:
**UNION CARBIDE CHEMICALS & PLASTICS
TECHNOLOGY CORPORATION
Danbury, Connecticut 06817-0001 (US)**

(72) Inventor: **Job, Robert Charles
Houston, Texas 77077 (US)**

(74) Representative:
**Allard, Susan Joyce
BOULT WADE TENNANT,
27 Furnival Street
London EC4A 1PQ (GB)**

(56) References cited:
**EP-A- 0 010 746      EP-A- 0 268 274**
**EP-A- 0 319 173      US-A- 5 034 361**

**Description**

This invention relates to a magnesium-containing, titanium-containing precursor of a catalyst component which can be used to produce a high activity olefin polymerization catalyst.

The production of polymers of $\alpha$-olefins, particularly ethylene and propylene, has gained commercial acceptance. The products are inexpensive and exhibit a number of commercially useful properties. In the case of the polymerization of ethylene the process is uncomplicated in that the product type is not influenced by the manner in which the ethylene molecules add to the growing polymer chain and the polymeric product does not exist in stereoisomeric forms.

In the case of polymerization of propylene the presence of methyl groups provides the several types of product depending on the steric regularity with which units add to the growing polymeric chain. Most commercial polypropylene is crystalline and results from stereoregular addition of propylene units in a regular head-to-tail manner. Polypropylene in which the units add randomly is termed atactic. This amorphous form is less desirable and often must be removed as by extraction.

Also significant is the activity of the polymerization catalyst. The early trivalent titanium, chromium or vanadium catalysts were of low activity and the product contained a significant proportion of catalyst residues. Removal of such residues was required to obtain commercially satisfactory properties.

The more recent titanium-based polymerization catalysts are stereoregulating and have sufficient activity to avoid extraction and deashing steps. In terms employed conventionally, the high activity catalysts are formed from a solid procatalyst which typically contains magnesium, titanium and halide moieties, a cocatalyst which is usually an organoaluminum compound and a selectivity control agent (SCA). Each of these components influences the catalyst and polymer produced therefrom but the procatalyst seems to have the greatest influence.

US-A-4,330,649 describes a procatalyst obtained by heating a magnesium compound with a higher alcohol and an ester to produce a solution. This solution is added to $TiCl_4$ and an electron donor (ED) to form the procatalyst. US-A-4,472,521 describes reacting a magnesium alkoxide with a titanium alkoxide in an aromatic hydrocarbon. $TiCl_4$ and an ED are added to form a solid which is post-treated with transition metal halide. US-A-4,540,679 describes the production of a catalyst component by contacting a suspension of $Mg(OC_2H_5)_2$ in ethanol with $CO_2$. The addition of organoaluminum in hydrocarbon produces granular particles employed as support for titanium compound upon contact with $TiCl_4$. US-A-4728705 describes solubilizing $Mg(OC_2H_55)_2$ in ethanol with $CO_2$ and spray drying the resulting solution or using the solution to impregnate carrier particles. Either type of particle is useful in the production of procatalyst of desirable morphology.

A different catalyst is described in US-A-4,710,428, wherein a magnesium compound of the general formula

$$Mg_4(OR)_6(ROH)_{10}A \qquad\qquad (I)$$

is formed wherein R is lower alkyl and A is at least one anion having a total oxidation state of -2. This complex is reacted with tetravalent titanium halide, a halohydrocarbon and an ED to form a procatalyst. The use of the above complexes has advantages in that the complexes are crystals of desirable morphology in contrast to $Mg(OC_2H_5)_2$ which is not. The crystals can be converted to olefin polymerization catalyst precursors and to catalysts by largely conventional technology. The catalysts are active and produce polymer products of good properties. It would be of advantage to produce improved catalyst precursors and olefin polymerization catalysts whose use results in improved polymer product.

The invention provides complex magnesium-containing, titanium-containing compounds useful as precursors of high activity olefin polymerization catalysts and a process of polymerizing lower $\alpha$-olefins employing such catalysts. The polyolefins obtained by use of the catalysts have good properties and are obtained in good yield.

Accordingly the invention provides an olefin polymerization procatalyst precursor which contains moieties of magnesium and titanium which is obtainable by contacting a magnesium alkoxide, a titanium alkoxide, a titanium tetrahalide, a phenolic compound and an alkanol, and removing alkanol from the resulting mixture, wherein each alkoxide has up to 4 carbon atoms.

The procatalyst precursor can then be contacted with a halide of tetravalent titanium halide, an optional halohydrocarbon and an ED to form a solid pro-catalyst. The procatalyst in turn can then be contacted with an organoaluminum cocatalyst and an SCA to form a high activity olefin polymerization catalyst. The conversion of procatalyst precursor to procatalyst and of procatalyst to catalyst is largely conventional, but the procatalyst precursor can suitably be formed by a number of procedures and takes various forms and compositions depending upon the method of its preparation.

In accordance with the invention the procatalyst is a complex of indefinite stoichiometry formed from a magnesium alkoxide, wherein each alkoxide independently has up to 4 carbon atoms inclusive, a tetravalent titanium alkoxide wherein each alkoxide suitably has up to 4 carbon atoms inclusive, a halide of tetravalent titanium, a phenolic compound and an alkanol. The alkoxide moieties of one or both alkoxides can be the same as or different from other alkoxides and are preferably ethoxy, and the halide moieties suitably are chloro or bromo but preferably are chloro. The

2

phenolic compound is selected from phenol and an activating group-substituted phenol where the activating group is as described above.

This procatalyst precursor is suitably produced by contacting the reactants in an inert reaction diluent, e.g. a hydrocarbon such as isopentane, isooctane or cyclohexane, or a halohydrocarbon such as methylene chloride or chlorobenzene. Isooctane and chlorobenzene are preferred. The formation of the procatalyst precursor does not appear to follow conventional molar stoichiometry but is illustrated by the following partial general equation employing preferred alkoxide and halide moieties:-

$$3\ Mg(OC_2H_5)_2 + x\ Ti(OC_2H_5)_4 + y\ TiCl_4 + z\ \text{o-cresol} + w\ C_2H_5OH \rightarrow$$

wherein $0.1 \leq y < 0.8$, $0.2 < (x+y) < 3$, $0.05 < z < 3$ and $0.5 < w < 9$.

Preferably, $0.3 < y < 0.5$, $0.5 < (x+y) < 2$, $0.1 < z < 2$ and $2 < w < 5$.

The initial reaction suitably takes place in a non-gaseous state at a reaction temperature from 30°C to 120°C, preferably from 35°C to 90°C, to produce a generally clear solution. This solution can then be heated to a higher temperature sufficient to remove alkanol, typically as an azeotrope with a portion of the inert reaction diluent. The temperature of this second heating will depend in part upon the boiling point of any alkanol-containing azeotrope which is formed, e.g. temperatures from 70°C to 120°C, preferably from 85°C to 110°C. The removal of alkanol results in the production of the procatalyst precursor in the form of opaque, spheroidal particles. This olefin polymerization procatalyst precursor can be converted to a procatalyst by methods described below.

The olefin polymerization procatalyst precursor can be converted to a procatalyst by contact with a halide of tetravalent titanium, optionally with halohydrocarbon, and an ED. The halide of tetravalent titanium can be an aryloxy- or an alkoxy- di- or trihalide such as diethoxytitanium dichloride, dihexyloxytitanium dibromide, isopropyloxytitanium trichloride, or phenoxytitanium tribromide, or can be a titanium tetrahalide such as $TiCl_4$ or $TiBr_4$. A titanium tetrahalide is preferred, particularly $TiCl_4$.

The halohydrocarbon optionally employed in the production of procatalyst suitably has up to 12 carbon atoms, preferably up to 9 carbon atoms, and contains at least one halogen atom or in the case of aliphatic halohydrocarbons contains at least two halogens. Exemplary aliphatic halohydrocarbons include $CH_2Cl_2$, $CH_2Br_2$, $CHCl_3$, $CCl_4$, 1,2-dibromoethane, 1,1,3-trichloropropane, 1,1,2-trichloroethane, trichlorocyclohexane, dichlorofluoromethane and trichloroisooctane. Aromatic halohydrocarbons suitably employed include chlorobenzene, bromobenzene, dichlorobenzene and chlorotoluene. Of the aliphatic halohydrocarbons $CCl_4$ and 1,1,2-trichloroethane are preferred, but particularly preferred is chlorobenzene.

The electron donor employed in the procatalyst is an ED conventionally used in titanium-based olefin polymerization procatalyst. The ED can be free from active hydrogens. Examples of suitable electron donors include ethers, esters, ketones, amines, imines, amides, nitriles, phosphines, stibines, arsines and alcoholates. A preferred ED is an ester, particularly an alkyl ester of an aromatic monocarboxylic or dicarboxylic acid. Preferred ED's are ethyl benzoate, ethyl p-ethylbenzoate and diisobutyl phthalate. The ED can be a mixture of compounds but preferably is a single compound. Ethyl benzoate and diisobutyl phthalate are preferred.

The manner in which the procatalyst precursor, halide of tetravalent titanium, the halohydrocarbon when employed and the ED are contacted is material but not critical. Best results are obtained when the ED is added to the procatalyst precursor and the resulting mixture is added to at least a portion of the halide of tetravalent titanium. Alternatively, the halide of tetravalent titanium is added to a mixture of the procatalyst precursor and the ED. Other modifications are suitable but less preferred. The resulting solid is typically washed with a 50/50 mixture by volume of additional halide of tetravalent titanium and halohydrocarbon at least once and often twice or more times. This washing process, often termed a halogenation, is frequently aided by the additional presence of an acid halide, particularly an aromatic acid halide such as benzoyl chloride or phthaloyl chloride. Subsequent to contacting with a halide of tetravalent titanium and halohydrocarbon, the resulting solid procatalyst can be washed with a light hydrocarbon to remove unreacted titanium compounds.

In the preferred modification, the initial contacting of ED and procatalyst precursor is conducted at a temperature from about ambient temperature to about 150°C. Preferably, the materials are mixed at ambient temperature. Sufficient halide of tetravalent titanium and any acid halide are used to convert a substantial portion of the anion moieties of the procatalyst precursor to halide moieties. Sufficient ED is used so that the molar ratio of ED to Mg present in the procatalyst precursor is from 0.01:1 to 10:1, preferably from 0.06:1 to 0.4:1. The final washing produces procatalyst which is stable upon drying in the absence of $O_2$ and active hydrogen compounds or useful without drying in the formation of an olefin polymerization catalyst by reaction with a cocatalyst and SCA.

The cocatalyst is an organoaluminum compound of the type normally employed with titanium-based procatalysts in the production of high-activity olefin polymerization catalysts. Suitable organoaluminum compounds are alkylaluminum compounds such as trialkylaluminum compounds, alkylaluminum halide compounds and alkylaluminum alkoxide compounds wherein each alkyl independently has 2 to 6 carbon atoms. The preferred alkylaluminum compounds are free of halide moieties and particularly preferred are trialkylaluminum compounds such as triethylaluminum, triisobutylaluminum and diethylhexylaluminum. Triethylaluminum is especially preferred. The organoaluminum compound is suitably employed in sufficient quantity to provide from 1 mole to 150 moles of aluminum per mole of titanium in the procatalyst, preferably from 10 moles to 100 moles of aluminum per mole of titanium.

The SCA employed in catalyst production can be any conventionally utilized in olefin polymerization catalysts based on titanium. A suitable SCA is an ED such as those above for use in procatalyst production but may also be an organosilane of the formula $R'_qSi(OR)_{4-q}$ wherein R' is alkyl or aryl of up to 10 carbon atoms, R has the previously stated meaning and q is 1 or 2. A preferred SCA is an ester of an aromatic acid, e.g. ethyl p-ethylbenzoate, diisobutyl phthalate, or ethyl p-methylbenzoate, or an alkylalkoxysilane such as diisobutyldimethoxysilane, isopropyltrimethoxysilane or cyclohexylmethyldimethoxysilane. The SCA is suitably provided to give from 0.01 mole to 100 moles of SCA per mole of titanium in the procatalyst, preferably from 0.5 mole to 20 moles per mole of titanium.

The components of the olefin polymerization catalyst are contacted by largely conventional methods. In one modification, the components are contacted outside the polymerization zone as by mixing the components and introducing the preformed catalyst into the polymerization reactor. In an alternative modification, the catalyst components are introduced separately into the polymerization reactor and the catalyst is formed in situ. The olefin polymerization catalyst is useful in the polymerization of lower $\alpha$-olefins under polymerization conditions and particularly in the polymerization of straight-chain $\alpha$-olefins of up to 4 carbon atoms, i.e ethylene, propylene and 1-butene. The procedure of the polymerization process of the invention, by virtue of its use of a catalyst produced from the complex procatalyst precursors of the invention, provides polyolefin product having good properties in quantities which reflect the high activity of the catalyst. The polymerization product can be a homopolymer, e.g. polyethylene or polypropylene, when a single $\alpha$-olefin monomer is supplied to the reactor. Alternatively, the product can be a copolymer (or terpolymer) such as EPR or polypropylene impact copolymer when two or more monomers are provided to the polymerization reactor.

The polymerization can be conducted as a gas-phase process employing one or more fluidized catalyst beds or can be conducted as a slurry-phase process employing as a diluent an inert material such as propane or a liquified monomer of the polymerization such as propylene. The molecular weight of the polymer product and thus to some extent the properties of the product are influenced by the provisions to the polymerization system of molecular hydrogen as is known in the art. The process can be conducted batch-wise or in a continuous or semi-continuous manner.

The catalyst productivity is often inversely related to selectivity so that highly active catalysts often afford polymer product of low stereoregularity. The catalysts of the invention exhibit good productivity while retaining a desirably high stereospecificity so that polymer is obtained in good quantities with sufficiently good properties that extraction and deashing steps are not required.

The invention will be further illustrated by reference to the following Examples. In the Examples the productivity of the catalyst (also termed "yield") is determined in kg of polymer product per gram of catalyst in a standard batch process of 1 hour. The stereospecificity of the catalyst and specifically the selectivity to isotactic product is determined by measuring the xylene solubles (XS) in accordance with the regulations of the U.S. Food and Drug Administration. The test for XS comprises dissolving a polymer sample in xylene under reflux in a flask. The flask is then placed in a water bath at 25°C for 1 hour without stirring. The precipitate formed is then removed by filtration and the solubles content is determined by evaporating an aliquot of the filtrate followed by drying and weighing the residue. The xylene solubles consist primarily of amorphous (atactic) polymer and a small amount of low molecular weight polymer. The bulk density of polymer product (B.D.) is determined in g/cm$^3$

Example I

A. In a 0.23 litre (8 oz) bottle, 2.0g (10.5 mmol) of $TiCl_4$, 3.76g (15.7 mmol) of 95% $Ti(OC_2H_5)_4$, 8.12g (71 mmol) of $Mg(OC_2H_5)_2$ and 94g (8.7 mmol) of o-cresol were slurried in 100g of chlorobenzene and 5.4g of ethanol were added while the mixture was stirred at 440 rpm. The bottle was capped and immersed in an oil bath at 105°C. The $Mg(OC_2H_5)_2$ quickly dissolved but the solution remained murky. After about 1 hour the cap was removed and the mixture was stirred for 2 more hours and filtered while hot. The solids thus obtained were washed with warm chlorobenzene, with isooctane and dried under flowing $N_2$. The solids, 9.2g, were nearly white, opaque spheroids.

B. In a flask equipped with a polytetrafluoroethylene stir paddle were slurried 39.6g (165 mmol) of 95% $Ti(OC_2H_5)_4$, 8.12g (710 mmol) of $Mg(OC_2H_5)_2$ and 9.4g (86.7 mmol) of o-cresol, 52.5g (1.14 mole) of ethanol and 800g of chlorobenzene. While the mixture was stirred at 300 rpm under a $N_2$ blanket, a solution of 18g (95 mmol) of $TiCl_4$ in 200g of chlorobenzene was rapidly added. The flask was heated to 60°C-65°C and nearly all solids dissolved after 2 hours. The mixture was then heated to 92°C and a stream of $N_2$ was passed over the surface of the flask contents and the evolved ethanol was collected. After stirring overnight, the volume had decreased by about 5% and a musky solution resulted. The slurry was filtered while hot and the recovered solids were washed with chlorobenzene, twice with isooctane and dried under flowing nitrogen. A yield of 110.4g of primarily opaque spheroids in the 15-70 micron size range was obtained. The particles analyzed contained 13.6% by weight Mg and 8.1% by weight Ti.

C. The procatalyst precursors of Example I.A and B were converted to procatalysts by washing the resulting solid product at 110°C with 150 ml of a 50/50 by volume mixture of chlorobenzene and TiCl$_4$ containing 6 mmol/litre of phthaloyl chloride. This was followed by a 30 minute wash at 110°C with the 50/50 mixture. The resulting solid procatalyst was washed twice with isooctane at room temperature and dried under N$_2$ at 50°C.

The procatalyst obtained from the Example I. A precursor contained 2.4 % wt. Ti, 18.7 % wt. Mg. and 60 % wt. Cl. The procatalyst obtained from the precursor of Example I.B contained 2.89% wt. Ti, 19.4% wt. Mg and 59.8% wt. Cl.

D. The procatalysts of Examples I.C were converted to catalysts by mixing with triethylaluminum cocatalyst and diisobutyldimethoxysilane SCA. The quantities of components gave a molar Al/Si/Ti ratio of 70/20/1. The components were mixed prior to injection into a 1-litre autoclave containing propylene and the resulting polymerization using liquid propylene diluent took place at 67°C for 1 hour. Molecular hydrogen (43 mmol) was also added. The results of the polymerizations are shown in Table V which shows the precursor origin of the catalyst. The term "H" indicates that the catalyst was injected into the autoclave with contents heated to 67°C. The term "R" indicates that the catalyst was injected into the autoclave at room temperature and the total contents heated to 67°C over a 15-minute period. In each case, the final polymer was obtained as essentially spheroidal particles.

TABLE V

| Precursor. | Injection | Yield | XS | BD |
|---|---|---|---|---|
| I.A | H | 35.4 | 3.3 | 0.390 |
| | R | 36.6 | 3.2 | 0.447 |
| I.B | H | 33.1 | 3.5 | 0.413 |
| | R | 50.0 | 3.2 | 0.471 |

## Claims

1. An olefin polymerization procatalyst precursor which contains moieties of magnesium and titanium which is obtainable by contacting a magnesium alkoxide, a titanium alkoxide, a titanium tetrahalide, a phenolic compound and an alkanol, and removing alkanol from the resulting mixture, wherein each alkoxide has up to 4 carbon atoms.

2. A precursor as claimed in claim 1 wherein the phenolic compound is selected from phenol and activating group-substituted phenol.

3. A precursor as claimed in any one of the preceding claims wherein the magnesium alkoxide is magnesium ethoxide.

4. A precursor as claimed in any one of the preceding claims wherein the titanium alkoxide is titanium tetraethoxide.

5. A precursor as claimed in any one of the preceding claims wherein the alkanol is ethanol.

6. A solid olefin polymerization procatalyst obtainable by contacting a procatalyst precursor as claimed in any one of claims 1 to 5 with a halide of tetravalent titanium, an optional halohydrocarbon and an electron donor.

7. A procatalyst as claimed in claim 6 wherein the halide of tetravalent titanium is titanium tetrachloride and the electron donor is an alkyl ester of an aromatic monocarboxylic or dicarboxylic acid.

8. A high activity olefin polymerization catalyst obtainable by contacting a procatalyst as claimed in claim 6 or claim 7 with an organoaluminium compound cocatalyst and a selectivity control agent.

9. A catalyst according to claim 8 wherein the cocatalyst is trialkylaluminium and the selectivity control agent is an alkyl ester of an aromatic monocarboxylic or dicarboxylic acid or an organosilane of the formula

$$R'_q Si(OR)_{4-q}$$

wherein R' is alkyl or aryl of up to 10 carbon atoms, R is alkyl of up to 4 carbon atoms and q is 1 or 2.

10. A process for polymerizing a lower $\alpha$-olefin having up to 4 carbon atoms which comprises contacting at least one lower $\alpha$-olefin having up to 4 carbon atoms under polymerization conditions with a catalyst as claimed in claim 8 or claim 9.

11. A process as according to claim 10 wherein the lower $\alpha$-olefin is propylene.

**Patentansprüche**

1. Olefinpolymerisations-Prokatalysator-Vorläufer, enthaltend Gruppierungen von Magnesium und Titan, welcher erhältlich ist durch Kontaktieren eines Magnesiumalkoxids, eines Titanalkoxids, eines Titantetrahalogenids, einer Phenolverbindung und eines Alkanols und Entfernung von Alkanol aus der resultierenden Mischung, wobei jedes Alkoxid bis zu 4 Kohlenstoffatome aufweist.

2. Vorläufer nach Anspruch 1, worin die Phenolverbindung aus Phenol und einem mit aktivierender Gruppe substituierten Phenol ausgewählt ist.

3. Vorläufer nach irgendeinem der vorhergehenden Ansprüche, worin das Magnesiumalkoxid Magnesiumethoxid ist.

4. Vorläufer nach irgendeinem der vorhergehenden Ansprüche, worin das Titanalkoxid Titantetraethoxid ist.

5. Vorläufer nach irgendeinem der vorhergehenden Ansprüche, worin das Alkanol Ethanol ist.

6. Fester Olefinpolymerisations-Prokatalysator, erhältlich durch Kontaktieren eines Prokatalysator-Vorläufers nach irgendeinem der Ansprüche 1 bis 5 mit einem Halogenid von vierwertigem Titan, einem fakultativen Halogenkohlenwasserstoff und einem Elektronendonor.

7. Prokatalysator nach Anspruch 6, worin das Halogenid von vierwertigem Titan Titantetrachlorid und der Elektronendonor ein Alkylester einer aromatischen Monocarbonsäure oder Dicarbonsäure ist.

8. Olefinpolymerisations-Katalysator hoher Aktivität, erhältlich durch Kontaktieren eines Prokatalysators nach Anspruch 6 oder Anspruch 7 mit einem Organoaluminiumverbindungs-Cokatalysator und einem Selektivitätssteuerungsmittel.

9. Katalysator nach Anspruch 8, worin der Cokatalysator Trialkylaluminium ist und das Selektivitätssteuerungsmittel ein Alkylester einer aromatischen Monocarbonsäure oder Dicarbonsäure oder ein Organosilan der Formel

$$R'_q Si(OR)_{4-q}$$

ist, worin R' Alkyl oder Aryl mit bis zu 10 Kohlenstoffatomen ist, R Alkyl mit bis zu 4 Kohlenstoffatomen ist und q 1 oder 2 ist.

10. Verfahren zur Polymerisation eines niederen $\alpha$-Olefins mit bis zu 4 Kohlenstoffatomen, welches umfaßt das Kontaktieren mindestens eines niederen $\alpha$-Olefins mit bis zu 4 Kohlenstoffatomen unter Polymerisationsbedingungen mit einem Katalysator nach Anspruch 8 oder Anspruch 9.

11. Verfahren nach Anspruch 10, worin das niedere $\alpha$-Olefin Propylen ist.

**Revendications**

1. Précurseur procatalyseur de polymérisation d'oléfines, qui contient des groupements de magnésium et de titane, qui peut être obtenu en mettant en contact un alcoolate de magnésium, un alcoolate de titane, un tétrahalogénure de titane, un composé phénolique et un alcanol, et en éliminant l'alcanol du mélange résultant, dans lequel chaque alcoolate a jusqu'à 4 atomes de carbone.

**2.** Précurseur suivant la revendication 1, dans lequel le composé phénolique est choisi entre le phénol et un phénol substitué avec un groupe activateur.

**3.** Précurseur suivant l'une quelconque des revendications précédentes, dans lequel l'alcoolate de magnésium consiste en éthylate de magnésium.

**4.** Précurseur suivant l'une quelconque des revendications précédentes, dans lequel l'alcoolate de titane consiste en tétra-éthylate de titane.

**5.** Précurseur suivant l'une quelconque des revendications précédentes, dans lequel l'alcanol consiste en éthanol.

**6.** Procatalyseur solide de polymérisation d'oléfines, pouvant être obtenu en mettant en contact un précurseur procatalyseur suivant l'une quelconque des revendications 1 à 5 avec un halogénure de titane tétravalent, un hydrocarbure halogéné facultatif et un donneur d'électrons.

**7.** Procatalyseur suivant la revendication 6, dans lequel l'halogénure de titane tétravalent consiste en tétrachlorure de titane et le donneur d'électrons consiste en un ester alkylique d'un acide aromatique monocarboxylique ou dicarboxylique.

**8.** Catalyseur à forte activité de polymérisation d'oléfines, pouvant être obtenu en mettant en contact un procatalyseur suivant la revendication 6 ou la revendication 7 avec un cocatalyseur consistant en un composé organique d'aluminium et un agent d'ajustement de sélectivité.

**9.** Catalyseur suivant la revendication 8, dans lequel le cocatalyseur consiste en un trialkylaluminium et l'agent d'ajustement de sélectivité consiste en un ester alkylique d'un acide aromatique monocarboxylique ou dicarboxylique ou un organosilane de formule

$$R'_qSi(OR)_{4-q}$$

dans laquelle R' représente un groupe alkyle ou aryle ayant jusqu'à 10 atomes de carbone, R représente un groupe alkyle ayant jusqu'à 4 atomes de carbone et $q$ est égal à 1 ou 2.

**10.** Procédé pour la polymérisation d'une $\alpha$-oléfine inférieure ayant jusqu'à 4 atomes de carbone, qui comprend la mise en contact d'au moins une $\alpha$-oléfine inférieure ayant jusqu'à 4 atomes de carbone, dans des conditions de polymérisation, avec un catalyseur suivant la revendication 8 ou la revendication 9.

**11.** Procédé suivant la revendication 10, dans lequel l'$\alpha$-oléfine inférieure consiste en propylène.